(19) Europäisches Patentamt
European Patent Office
Office européen des brevets

(11) **EP 1 012 114 B1**

(12) **EUROPÄISCHE PATENTSCHRIFT**

(45) Veröffentlichungstag und Bekanntmachung des Hinweises auf die Patenterteilung:
**10.07.2002   Patentblatt 2002/28**

(21) Anmeldenummer: **98943835.3**

(22) Anmeldetag: **04.08.1998**

(51) Int Cl.⁷: **C01B 21/14**

(86) Internationale Anmeldenummer:
**PCT/EP98/04850**

(87) Internationale Veröffentlichungsnummer:
**WO 99/07637 (18.02.1999 Gazette 1999/07)**

(54) **VERFAHREN ZUR HERSTELLUNG EINER WÄSSRIGEN LÖSUNG VON FREIEM HYDROXYLAMIN**

METHOD FOR PRODUCING AN AQUEOUS SOLUTION OF FREE HYDROXYLAMINE

PROCEDE DE PRODUCTION D'UNE SOLUTION AQUEUSE D'HYDROXYLAMINE LIBRE

(84) Benannte Vertragsstaaten:
**AT BE CH DE ES FI FR GB IE IT LI NL SE**

(30) Priorität: **04.08.1997   DE 19733681**

(43) Veröffentlichungstag der Anmeldung:
**28.06.2000   Patentblatt 2000/26**

(73) Patentinhaber: **BASF AKTIENGESELLSCHAFT 67056 Ludwigshafen (DE)**

(72) Erfinder:
• **WATZENBERGER, Otto D-68199 Mannheim (DE)**
• **MAUER, Peter D-67169 Kallstadt (DE)**
• **STRÖFER, Eckhard D-68163 Mannheim (DE)**
• **SCHELLING, Heiner D-67281 Kirchheim (DE)**
• **SCHNEIDER, Hans-Michael D-67549 Worms (DE)**

(74) Vertreter: **Kinzebach, Werner, Dr. et al Ludwigsplatz 4 67059 Ludwigshafen (DE)**

(56) Entgegenhaltungen:
**WO-A-97/22551          US-A- 5 266 290**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung metallionenfreier wässriger Lösungen von freiem Hydroxylamin.

Hydroxylamin (HA) ist ein wichtiges Zwischenprodukt für die chemische Industrie. Es bedarf jedoch besonderer Vorsicht bei der Handhabung, weil es die Augen, die Haut und die Schleimhäute reizt und allergen wirken kann. Vor allem aber ist es thermisch instabil, d.h. es zersetzt sich, insbesondere bei Anwesenheit von Metallionen, im stark basischen Milieu und in höherer Konzentration, langsam bis explosionsartig.

Hydroxylamin wird großtechnisch als Hydroxylammoniumsalz, üblicherweise als Hydroxylammoniumsulfat, hergestellt und auch als solches eingesetzt. Häufig ist aber die Anwendung einer salz- und metallionenfreien wässrigen Lösung von freiem Hydroxylamin hoher Konzentration erforderlich. Um den oben genannten Problemen und insbesondere der Zersetzlichkeit des Hydroxylamins vorzubeugen, hat die Fachwelt bei der Gewinnung salzfreier Hydroxylamin-Lösungen die Anwendung klassischer Methoden der Großchemie zur Anreicherung destillierbarer Substanzen, beispielsweise die Destillation, vermieden. Die Destillation von Hydroxylamin, selbst im Labormaßstab, wird sogar als besonders gefährliche Operation bezeichnet, siehe Roth-Weller: Gefährliche Chemische Reaktionen, Stoffinformationen Hydroxylamin, Seite 3, 1984, 2, Ecomed-Verlag. Die Destillation von Hydroxylamin in technischem Maßstab wurde deshalb auch nie in technischen Veröffentlichungen in Betracht gezogen. Stattdessen ist man auf Spezialmethoden ausgewichen, die jedoch alle mit gravierenden Nachteilen behaftet sind.

So wurde versucht, freies Hydroxylamin von wässrigen Salzlösungen mit Hilfe von Ionenaustauschern abzutrennen, siehe beispielsweise US-A-4,147,623, EP-A-1787, EP-A-237052 und Z. Anorg. Ch. 288, 28-35 (1956). Ein derartiges Verfahren führt jedoch nur zu verdünnten Lösungen bei niedrigen Raum-Zeit-Ausbeuten. Außerdem reagiert Hydroxylamin mit vielen Ionentauschern oder wird von diesen zersetzt.

Eine weitere Methode besteht in der Elektrodialyse einer wässrigen Hydoxylammoniumsalzlösung in Elektrolysezellen mit semipermeablen Membranen, wie es beispielsweise in der DE-A-33 47 259, der JP-A-123771 und JP-A-123772 beschrieben ist. Ein derartiges Verfahren ist jedoch technisch und wirtschaftlich aufwendig und hat bislang keinen Eingang in die Technik gefunden.

Aus der DE-A-35 28 463 ist bekannt, freies Hydroxylamin aus Hydroxylammoniumsulfat durch Behandlung mit Calcium-, Strontium- oder Bariumoxid und Abtrennung der unlöslichen Erdalkalimetallsulfate herzustellen. Bei dieser Methode bereitet die Abtrennung der feinteilig anfallenden Sulfate große Schwierigkeiten. Hinzu kommt, dass nur verdünnte Lösungen erhalten werden und dass freies Hydroxylamin bei Verwendung von Calciumoxid oder Calciumhydroxid aufgrund der relativ guten Löslichkeit des Calciumsulfats noch unerwünscht hohe Ionenmengen enthält. Bei Verwendung von Strontium- und Bariumverbindungen stehen einem technischen Produktionsverfahren zudem der relativ hohe Preis und vor allem die Toxizität entgegen.

Die DE-A-12 47 282 beschreibt ein Verfahren, bei dem man alkoholische Lösungen von freiem Hydroxylamin durch Umsetzen von Hydroxylammoniumsulfat mit Ammoniak in Alkohol als Lösungsmittel und Abtrennen des Ammoniumsulfats erhält. Ein ähnliches Verfahren beschreibt die EP-A-108 294. Für eine Reihe von Anwendungen sind alkoholische Lösungen aber ungeeignet und unerwünscht. So müssen bei der Handhabung derartiger Lösungen besondere Vorkehrungen wegen ihrer Brennbarkeit getroffen werden. Weiter muss der eingesetzte Alkohol in aller Regel aufwendig zurückgewonnen werden, da sich eine Einleitung von größeren Mengen an Alkohol in Kläranlagen oder in Vorfluter verbietet.

Schließlich beschreibt die DE-A-36 01 803 ein Verfahren zur Gewinnung von wässrigen Lösungen von freiem Hydroxylamin, bei dem man Hydroxylammoniumsulfat mit Ammoniak in niederen Alkoholen umsetzt, das ausgefallene Ammoniumsulfat abtrennt, die alkoholische Lösung von freiem Hydroxylamin mit Wasser versetzt und aus der so erhaltenen Lösung den Alkohol abdestilliert. Auch für dieses Verfahren gelten die oben genannten Nachteile beim Arbeiten mit Alkohol. Außerdem ist aufgrund der Zersetzlichkeit des Hydroxylamins in Verbindung mit der Brennbarkeit der Alkohole besondere Vorsicht in der abschließenden Destillationsstufe erforderlich. Allen Verfahren des Standes der Technik ist gemeinsam, dass sie für die Durchführung in technischem Maßstab nicht geeignet sind bzw. einen unwirtschaftlich hohen zusätzlichen Sicherheitsaufwand erfordern.

Für die Zersetzung von Hydroxylamin wird eine Temperatur oberhalb von 65 °C als kritisch angesehen. Bei einer Differenzthermoanalyse wurde die Onset-Temperatur einer 50 gew.-%igen wässrigen Hydroxylaminlösung (im Glastiegel) zu 70 °C ermittelt. Die freigesetzte Wärmemenge von ca. 2,2 kJ / g 50 gew.-%iger Lösung bestätigt das hohe thermische Potential des Stoffes. Die Differenzthermoanalyse ist eine mikrothermoanalytische Methode, die zur Abschätzung der thermischen Stabilität und des thermischen Potentials herangezogen wird. Die Onset-Temperatur ist die niedrigste Umgebungstemperatur, bei der in der Probe bei einer Aufheizrate von 1 K/min, beginnend bei 30 °C, eine merkliche exotherme Reaktion abläuft. Aus Sicherheitsgründen soll Verarbeitungstemperatur deutlich unterhalb der Onset-Temperatur liegen.

So beschreibt die US-A-4 956 168 im Rahmen der Herstellung von Hydroxylaminnitrat, dass eine Aufschlämmung von Hydroxylaminsulfat in Alkohol bei einer Temperatur die 65 °C nicht überschreitet, hergestellt wird. Diese Aufschlämmung wird dann mit Ammoniak bei einer Temperatur ≤ 65 °C behandelt, um eine alkoholische Hydroxylaminlösung herzustellen.

Die US-A-5 472 679 wiederum beschreibt ein Verfahren zur Herstellung einer alkoholfreien, wässrigen Hydroxylaminlösung durch Umsetzung einer Hydroxylaminsulfatlösung mit einer geeigneten Base bei einer Temperatur bis etwa 60 °C. Das erhaltene Gemisch wird dann einer Destillation unter verringertem Druck bei einer Temperatur von weniger als 65 °C unterworfen. Man erhält einen festen Rückstand (das bei der Freisetzung des Hydroxylamins gebildete Salz) und als Destillat eine wässrige Hydroxylaminlösung, die 16 bis 23 Gew.-% Hydroxylamin enthält. Dieses Verfahren hat den Nachteil, dass unter Vakuum gearbeitet und die Temperatur sehr sorgfältig kontrolliert werden muss. Es hat ferner folgende weitere Nachteile:

- Der Niederschlag bedingt ein Arbeiten mit Feststoffen. Bei einem kontinuierlichen Verfahren müsste der Feststoff entsprechend kontinuierlich ausgeschleust werden. Dies kann verfahrenstechnisch große Probleme bereiten, wenn es sich wie z. B. bei Natriumsulfat um einen zum Verbacken neigenden Feststoff handelt.

- Die "Destillation" bis zur Trockne, korrekt als Eindampfen bezeichnet, läuft derart ab, dass zunächst der Leichtsieder Wasser abdampft. Der Schwersieder HA reichert sich an. Es ist bekannt, dass die Zersetzungsneigung des HA mit der Konzentration an HA steigt. Damit steigen die Verluste an HA während des Prozesses. Es steigt das Risiko, dass es aufgrund der hohen Konzentration an HA zu einer explosionsartig verlaufenden Zersetzung kommt. Es ist bekannt, dass reines HA, bzw. HA > 70 Gew.-% sich explosiv zersetzen kann. Für den genannten Prozess sind somit entsprechende Sicherheitsanforderungen zu erfüllen.

- Der verbleibende Feststoff wird noch Restanteile an HA enthalten (An der Oberfläche adsorbiertes HA, HA in Feststoffzwischenräumen). Der Feststoff muss daher in einem gesonderten Entsorgungsverfahren dekontaminiert werden.

Das Eindampfen stellt somit kein im großtechnischen Maßstab vorteilhaft durchführbares Verfahren dar.

In der WO 97/22551 wird ein Verfahren zur Herstellung wässriger Lösungen von freiem Hydroxylamin beschrieben. Dabei wird ein Hydroxylammoniumsalz mit einer geeigneten Base in Wasser behandelt, aus der erhaltenen Lösung werden gegebenenfalls unlösliche Bestandteile abgetrennt, die erhaltene Lösung wird destillativ bei einer Temperatur oberhalb 80 °C in eine wässrige Hydroxylaminfraktion und eine Salzfraktion aufgetrennt, und falls gewünscht, wird die erhaltene wässrige Hydroxylaminlösung in einer Destillationskolonne aufkonzentriert, indem über Kopf dieser Kolonne Wasser abgezogen wird.

Als geeignete Base wird z. B. Ammoniak offenbart, doch lässt sich mit Ammoniak keine vollständige Ausbeute an freiem Hydroxylamin erzielen.

Dieses verfahren liefert nur dann eine vollständig Ausbeute an freiem Hydroxylamin, wenn zu dessen Freisetzung starke Basen eingesetzt werden. Aus wirtschafltichen Gründen wird großtechnisch als billige starke Base bevorzugt Natronlauge eingesetzt. Dabei wird dann als Nebenprodukt der Hydroxylaminfreisetzung Natriumsulfat gebildet. Dieses Salz fällt als wässrige Lösung an. Bei dem genannten Verfahren wird das freigesetzte Hydroxylamin durch Strippen mit Dampf aus der Salzlösung abgetrennt. Der Zulauf zu dieser Stripkolonne darf keinen Feststoff (ausgefallenes Salz) enthalten, damit ein Verstopfen der Kolonne vermieden wird. Aus diesem Grunde ist man bei diesem Prozess bei Verwendung von Natronlauge durch die Löslichkeitsgrenze von Natriumsulfat in der Wasser-Hydroxylaminlösung limitiert. Die Löslichkeit von Natriumsulfat in einer ca. 10 gew.-%igen Bydroxylamin-Wasser-Lösung beträgt ca. 24 Gew.-% bei 100 °C. Durch diese niedrige Löslichkeit ist auch die Konzentration an freiem Hydroxylamin in der Freisetzungslösung auf maximal ca. 10 Gew.-% limitiert, sofern keine Feststoffabtrennung vorgeschaltet wird. Aufgrund der leichten Zersetzlichkeit des Hydroxylamins, dessen sensibilisierender Wirkung und der Verbackungsneigung von Natriumsulfat wird man dies jedoch technisch wenn irgend möglich vermeiden.

Die durch die Löslichkeit des Natriumsulfats limitierte Hydroxylaminkonzentration begrenzt die maximal erreichbare Kapazität der technischen Anlage. Die Verwendung von Natronlauge führt zudem unweigerlich dazu, dass die Produktlösung immer, wenn auch in geringem Maße, Metallionen (Natriumionen) enthält.

Von großem technischem und wirtschaftlichem Vorteil wäre es, wenn man alternativ billigen Ammoniak einsetzen könnte. Die Wasserlöslichkeit von Ammoniumsulfat ist mit 50,9 Gew.-% bei 100 °C mehr als doppelt so hoch wie die von Natriumsulfat. Dadurch könnte die Hydroxylaminkonzentration und damit die Anlagenkapazität weit mehr als verdoppelt werden. Das bei der Neutralisation erhaltene Ammoniumsulfat kann zudem als wertvoller Dünger weiterverwertet werden, während Natriumsulfat als wertloser Ballast in die Abwasseraufbereitung abgegeben werden muss. Durch die Verwendung von Ammoniak als Base zur Hydroxylaminfreisetzung wird der Eintrag von Metallionen in das Produkt automatisch ausgeschlossen.

Ammoniak ist aber eine weit schwächere Base als Natronlauge. Während mit Natronlauge Hydroxylamin vollständig aus Hydroxylammoniumsulfat verdrängt werden kann, gelingt dies mit Ammoniak nicht. Bedingt durch das

sich einstellende Gleichgewicht:

$$(NH_2OH_2)_2SO_4 + 2\ NH_4OH \leftrightarrows (NH_4)_2SO_4 + 2\ NH_2OH + 2\ H_2O$$

werden nur ca. 60-70 % des vorliegenden Hydroxylamins freigesetzt. Der Rest liegt weiterhin als Sulfat gebunden vor. Dementsprechend kann mit dem vorgenannten Stripverfahren nur eine Hydroxylaminausbeute von 60-70 % erreicht werden. Über 30 % des Hydroxylamins würden als Hydroxyammoniumsulfat die Stripkolonne über den Sumpf in Richtung Abwasserbehandlung verlassen und wären damit für die technische Verwertung verloren. Diese hohe Hydroxylammoniumfracht würde zudem eine aufwendige Abwasserbehandlungseinrichtung erforderlich machen. Die Verwendung von Ammoniak stellt damit für das einfache Stripverfahren keine wirtschaftliche Alternative dar.

Der vorliegenden Erfindung liegt daher die Aufgabe zugrunde, ein Verfahren zur Herstellung von wässrigen, metallionenfreien Lösungen von freiem Hydroxylamin zur Verfügung zu stellen, das einfach und in technischem Maßstab durchführbar ist und die Verwendung von kostengünstigem Ammoniak für die vollständige metallionenfreie Hydroxylaminfreisetzung und -abtrennung ermöglicht.

Überraschenderweise wurde nun gefunden, dass diese Aufgabe gelöst wird, wenn man das Hydroxylammoniumsalz in wässriger Phase im Gegenstrom mit Ammoniak behandelt und dabei gleichzeitig die erhaltene Lösung durch Strippen mit Dampf in eine wässrige Hydroxylaminlösung und eine Salzfraktion auftrennt.

Gegenstand der vorliegenden Erfindung ist daher ein Verfahren zur Herstellung einer wässrigen Lösung von freiem Hydroxylamin durch Behandlung einer Hydroxylammoniumsalzlösung mit einer Base und destillativer Auftrennung der erhaltenen Lösung in eine wässrige Hydroxylaminlösung und eine Salzfraktion, das dadurch gekennzeichnet ist, dass man die Lösung im Gegenstrom mit Ammoniak oder Ammoniakwasser als Base behandelt und gleichzeitig durch Behandlung mit Wasser und/oder Wasserdampf die Auftrennung vornimmt.

Als Hydroxylammoniumsalz kommen im Allgemeinen die Hydroxylammoniumsalze von Mineralsäuren, wie z.B. der Schwefelsäure, Phosphorsäure oder Salzsäure, üblicherweise in wässriger Lösung, zur Anwendung.

Das Hydroxylammoniumsalz wird mit Ammoniak oder Ammoniakwasser in wässriger Lösung im Gegenstrom behandelt. Anstelle von Ammoniak sind auch andere flüchtige Basen geeignet. Brauchbare flüchtige Basen sind z. B. Mono-, Di- oder Trialkylamine, wie Methylamin, Dimethylamin, Trimethylamin, Ethylamin, Diethylamin oder Triethylamin, Mono-, Di- oder Trialkanolamine, wie Diethanolamin und cyclische Amine, wie Pyrrolidin oder Piperidin. Die Menge der Base wird so gewählt, dass das Hydroxylammoniumsalz vollständig oder zumindest zum überwiegenden Teil in freies Hydroxylamin überführt wird. Dies kann kontinuierlich oder diskontinuierlich und bei Temperaturen im Bereich von etwa 10°C bis 120°C erfolgen. Man erhält eine wässrige Lösung, die freies Hydroxylamin enthält und eine hydroxylaminfreie Lösung, die das Salz enthält, das aus dem Basenkation und dem im Hydroxylammoniumsalz vorhandenen Säureanion stammt.

Die Hydroxylaminfreisetzung und die Trennung der erhaltenen Lösung in eine wässrige Hydroxylaminlösung und eine Salzfraktion erfolgt vorzugsweise durch Behandlung im Gegenstrom mit Ammoniak und Wasserdampf mit Hilfe einer Stripkolonne (Strip-Reaktionskolonne). Diese ist mit üblichen Trennböden wie z.B. Sieb-oder Glockenböden, oder einer üblichen Packung versehen, z.B. Raschig-Ringen, Pall-Ringen, Sattelkörpern etc., und weist vorzugsweise eine theoretische Bodenzahl im Bereich von 10 bis 60 auf. Die Zuleitung der Hydroxylammoniumsalzlösung, die gegebenenfalls mit Stabilisator versetzt werden kann, erfolgt direkt auf den Kopf der Kolonne (Oberteil der Packung bzw. oberster oder einer der obersten Böden).

In der Stripkolonne erfolgt die Neutralisation und die Zerlegung der Lösung derart, dass die Salzfraktion am Sumpf der Kolonne und eine wässrige Hydroxylaminlösung in Höhe des Zulaufbodens, oder oberhalb davon abgezogen wird. Um dies zu erreichen, ist es erforderlich, die Hydroxylammoniumsalzlösung durch Einleiten von Ammoniak oder Ammoniakwasser und von Wasser und/oder Wasserdampf in den Kolonnensumpf im Gegenstrom zu behandeln. Beim Einleiten von Wasser und/oder Ammoniakwasser ist der Sumpf durch Wärmetauscher entsprechend zu beheizen, um die wässrige Lösungen zu verdampfen. Bei Verwendung von Ammoniakwasser kann die einzuleitende Menge an Wasser oder Wasserdampf reduziert werden oder sogar entfallen. Allerdings ist dann gegebenenfalls eine Sumpfbeheizung erforderlich.

Bei einer Hydroxylammoniumsulfatkonzentration von 5 bis 80 Gew.-% in der Feedlösung beträgt der Mengenstrom an Wasser bzw. Wasserdampf im Allgemeinen das 1- bis 8-fache, insbesondere das 1 bis 5-fache der Feed-Menge. Die Temperatur des eingeleiteten Wasserdampfs liegt im Allgemeinen im Bereich von 80 bis 180°C.

Der Druck in der Strip-Reaktionskolonne beträgt im Allgemeinen 5 bis 300 kPa (0,05 bis 3 bar), vorzugsweise 10 bis 110 kPa (0,1 bis 1,1 bar). Besonders bevorzugt ist es, die Strip-Reaktionskolonne bei einem Druck im Bereich von 50 bis 110 kPa (0,5 bis 1,1 bar) und insbesondere bei Normaldruck zu betreiben.

Die in der Strip-Reaktionskolonne herrschenden Temperaturen richten sich nach dem Druck, bei dem die Kolonne betrieben wird. Sie liegen im Allgemeinen im Bereich von 30 bis 130°C, vorzugsweiswe 80 bis 130°C.

Die über Kopf der Strip-Reaktionskolonne abgezogene wässrige (dampfförmige oder flüssige) Hydroxylaminfraktion enthält üblicherweise 20 - 300 g Hydroxylamin/l und kann gewünschtenfalls in einer Destillationskolonne in einer üblichen technischen Ausführung aufkonzentriert werden. Eine Kolonne mit einer theoretischen Bodenzahl von 4 bis 30 ist bevorzugt. Der Zusatz von Stabilisator kann dabei vorteilhaft sein.

Die erhaltene Hydroxylaminlösung kann gewünschtenfalls in einer Destillationskolonne aufkonzentriert werden. Es kann vorteilhaft sein, vor der Destillation noch Stabilisator zuzugegeben. Die Hydroxylaminlösung wird vorzugsweise in Höhe von etwa einem Drittel der theoretischen Bodenzahl der Destillationskolonne eingespeist. Man erhält bei der Destillation über Kopf weitgehend hydroxylaminfreies Wasser und am Sumpf eine Hydroxylaminlösung, deren Konzentration von den Destillationsbedingungen abhängig ist.

Im Allgemeinen arbeitet man in der Destillationskolonne mit einem Druck im Bereich von 1 bis 200 kPa (0,01 bis 2 bar), vorzugsweise 5 bis 120 kPa (0,05 bis 1,2 bar), besonders bevorzugt 10 bis 110 kPa (0,1 bis 1,1 bar). Je höher das Hydroxylamin aufkonzentriert werden soll, umso schonender (niedriger Druck und niedrige Temperatur) muss destilliert werden. Die Destillation kann kontinuierlich oder diskontinuierlich erfolgen.

Das über Kopf der Destillationskolonne abgezogene Wasser bzw. der Brüden kann wieder direkt oder nach Kompression oder Überhitzung als Stripdampf in den Sumpf der Strip-Reaktionskolonne zurückgeführt oder als Abwasser der Abwasseraufbereitung zugeführt werden.

Gegebenenfalls wird über dem Zulaufboden noch eine Einrichtung zum Abscheiden mitgerissener Tröpfchen (z.B. Demister) installiert.

Gemäß einer besonders bevorzugten Ausführungsform erfolgen die Neutralisation mit Ammoniak im Gegenstrom und das Ausstrippen des Hydroxylamins aus der Salzlösung in Kombination mit einer teilweisen Aufkonzentration der Hydroxylaminlösung in nur einer Kolonne, nämlich einer Strip-Reaktions-Destillationskolonne. Dabei wird Wasser über Kopf abdestilliert und die Entnahme der aufkonzentrierten Hydroxylaminlösung erfolgt etwa 1 bis 3 Böden über der Zuleitung der hydroxylammoniumsulfathaltigen Salzlösung . Die Salzlösung wird etwa in der Mitte der Kolonne zugespeist (ca. 10 bis 40 theoretische Böden über dem Sumpf). Der benötigte Ammoniak bzw. das Ammoniakwasser wird entweder direkt in den Sumpf geleitet, oder bevorzugterweise 1 bis 5 Böden oberhalb des Sumpfes. Letztere Ausgestaltung hat den Vorteil, dass die Böden unterhalb der Ammoniakeinleitestelle dazu dienen, den Ammoniak unterhalb der Zulaufstelle vollständig aus der Sumpfablauflösung auszustrippen.

Die hydroxylaminfreie Salzfraktion wird am Sumpf der Kolonne abgezogen. Die theoretische Bodenzahl der Strip-Reaktions-Destillationskolonne liegt im Allgemeinen im Bereich von 20 bis 50 und das Rücklaufverhältnis im Verstärkerteil wird so eingeregelt, dass es im Bereich von 0,5 bis 3 liegt. Im Übrigen wird die Strip-Reaktions-Destillationskolonne wie oben beschrieben betrieben.

Das erfindungsgemäße Verfahren hat den Vorteil, dass es einfach und schonend durchführbar ist. Der Eintrag von Metallionen wird sicher vermieden. Der Einsatz brennbarer Stoffe und das Arbeiten mit Feststoffen wird vermieden. Die Konzentration an Hydroxylamin ist über den gesamten Prozess gering. Beispielsweise liegt sie in der Strip-Reaktionskolonne bzw. Strip-Reaktions-Destillationskolonne bei weniger als 30 Gew.-%. Aufgrund der Betriebsweise der Strip-Reaktionskolonne bzw. Strip-Reaktions-Destillationskolonne ist der Flüssigkeits-Hold-up minimal und die Verweilzeit im Prozess ist verhältnismäßig kurz. Hinzu kommt, dass die Betriebsweise der Strip-Reaktionskolonne bzw. Strip-Reaktions-Destillationskolonne es erlaubt, bei höheren Drücken und insbesondere bei Normaldruck zu arbeiten.

Die Hydroxylaminfreisetzung in der der Strip-Reaktionskolonne bzw. Strip-Reaktions-Destillationskolonne kann aufgrund der relativ kurzen Verweilzeiten falls gewünscht auch ohne den Zusatz von Stabilisator erfolgen. Dabei findet nur eine gegenüber stabilisierten Lösungen geringfügig erhöhte Zersetzung statt. Der Zusatz geeigneter Stabilisatoren, wie sie beispielsweise in der WO 97/22551 beschrieben werden kann die Hydroxylaminzersetzung auf einen Minimalwert zurückdrängen.

Höhere Hydroxylaminkonzentrationen treten erst beim Aufkonzentrieren in einer Destillationskolonne auf. Die Hydroxylaminkonzentration lässt sich beliebig einstellen, beispielsweise im Bereich von 30 bis 70 Gew.-%. Um dabei das Zersetzungsrisiko zu verringern, kann in die zu destillierende Lösung Stabilisator gegeben werden.

Die für das erfindungsgemäße Verfahren erforderlichen Apparaturen können aus nicht-metallischen Werkstoffen, wie Glas, Keramik, Kunststoffen, gefertigt werden. Dadurch ist die durch Metallionen initiierte Zersetzung ausgeschlossen. Überraschenderweise hat sich aber gezeigt, dass die Apparaturen auch aus speziellen metallischen Werkstoffen, wie Platin oder Gold, gefertigt werden können, ohne dass eine signifikant erhöhte Zersetzung des Hydroxylamins zu beobachten ist.

Aufgrund der einfachen aber gleichzeitig sicheren Prozessgestaltung ist für die Durchführung des erfindungsgemäßen Verfahrens in industriellem Maßstab ein nur geringer Investitionsbedarf erforderlich. Zudem ist das Verfahren nahezu beliebig scale-up-fähig.

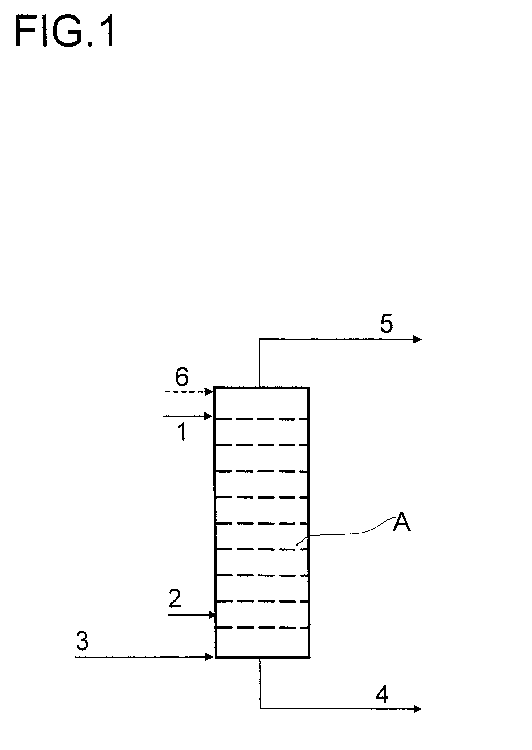

Das erfindungsgemäße Verfahren wird weiter anhand der in den Figuren 1 bis 2 geeigten Fließschemata erläutert:

Gemäß Figur 1 erfolgt die Hydroxylaminfreisetzung und die Hydroxylaminabtrennung in einer Strip-Reaktionskolonne A, wobei die Hydroxylammoniumsalzlösung 1 auf den Kopf der Kolonne aufgegeben wird. In den Kolonnensumpf werden Ammoniak 2 und Wasserdampf 3 eingeleitet. Die Auftrennung erfolgt derart, dass am Sumpf der Kolonne die weitgehend hydroxylaminfreie Salzlösung 4 und über Kopf eine salzfreie wässrige Hydroxylaminfraktion 5 (dampfförmig oder flüssig) abgezogen wird. Falls gewünscht kann auf den Kopf der Stripkolonne Stabilisator 6 zugesetzt werden.

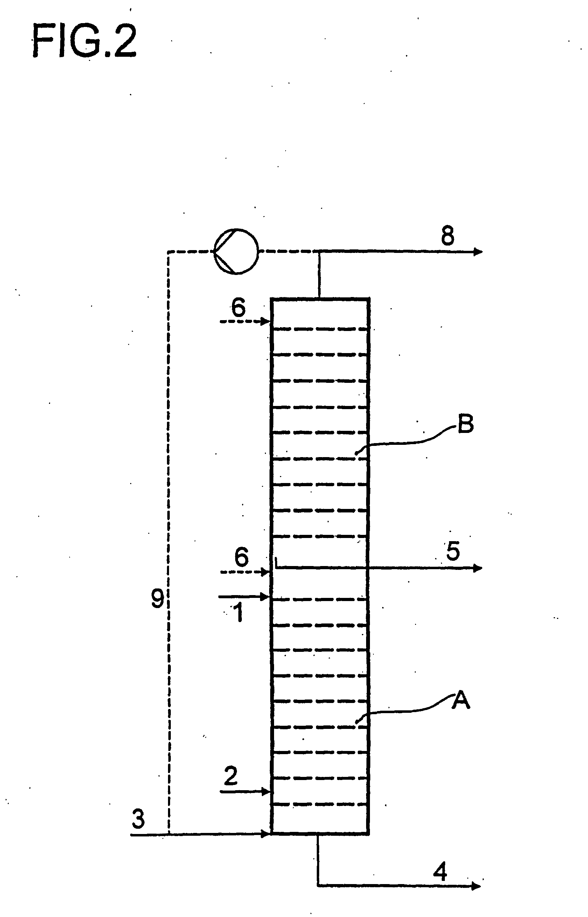

Gemäß Figur 2 wird die Hydroxylammoniumsalzlösung 1 in eine Strip-Reaktions-Destillationskolonne A+B eingespeist. Der untere Teil der Kolonne besteht aus einem Strippabschnitt A und der obere Teil aus einem Destillationsabschnitt B. Die Hydroxylammoniumsalzlösung 1 wird zwischen diesen beiden Abschnitten d.h. auf den Kopf des Stripabschnittes eingespeist. Die Hydroxylaminfreisetzung und Hydroxylaminauftrennung in der Strip-Reaktions-Destillationskolonne erfolgt derart, dass am Sumpf der Kolonne die weitgehend hydroxylaminfreie Salzlösung 4 und über Kopf weitgehend hydroxylaminfreies Wasser 8 abgezogen werden. Die salzfreie, ca. 5 bis 60 gew.-%ige Hydroxylaminlösung 5 wird über einen Seitenabzug entnommen. Falls gewünscht, kann Stabilisator auf den Kopf der Stripkolonne A 6 und/oder auf den Kopf der Destillationskolonne B 7 zugesetzt werden.

Die folgenden Beispiele erläutern die Erfindung ohne sie zu begrenzen.

Die Versuche wurden in einer Laborversuchsanlage, bestehend im Wesentlichen aus einem Rührkessel, einer Glas-Stripkolonne und einer nachgeschalteten Glas-Destillationskolonne mit den entsprechenden Vorratsbehältern, Dosierpumpen, Produktbehältern auf Waagen, Dampfanschluss am Kolonnensumpf und nachgeschalteten Kühlern, durchgeführt. Die Stripkolonne hatte einen Innendurchmesser von 50 mm, eine Höhe von 3000 mm und war mit Füllkörpern, Durchmesser 5 mm, gefüllt. Bei der Destillationskolonne handelte es sich um eine Doppelmantelkolonne, Innendurchmesser 45 mm, Höhe 2,5 m, die mit Füllkörpern, Durchmesser 5 mm, gefüllt war.

Ausgangsprodukt war Hydroxylammoniumsulfatlösung (25 gew.-%ig). Der Hydroxylammoniumsulfatlösung wurde gegebenenfalls Stabilisator zugesetzt. In den Vergleichsbeispielen wurde die Lösung kontinuierlich mittels einer Pumpe in einen kontinuierlich durchströmten Rührkessel aus Glas, 100 ml , geleitet. Gleichzeitig wurde kontinuierlich soviel an Base mittels Pumpe dem Rührkessel zugegeben, dass sich der gewünschte Neutralisationspunkt, erkennbar am pH-Wert, einstellt.

Die Base Hydroxylamin wurde durch die Umsetzung mit Natronlauge bzw. Ammoniak freigesetzt.

Aus der wässrigen Salzlösung wurde in der Stripkolonne die freie Base Hydroxylamin mit Dampf (ca. 1 bis 6 kg Dampf/kg Feed) ausgestrippt. Der Dampf wurde direkt in den Sumpf der Kolonne geleitet. Die Salzlösung wurde kontinuierlich am Sumpf der Kolonne abgezogen.

Der Brüden aus der Stripkolonne mit ca. 2 bis 10 Gew.-% Hydroxylamin wurde in den untersten Boden der nachgeschalteten Destillationskolonne geleitet. Am Kopf der Destillationskolonne wurde Destillat (weitgehend hydroxylaminfreies Wasser) abgezogen. Ein Teil des Kondensats wurde als Rücklauf auf die Kolonne zurückgeleitet. Aus dem Sumpf wurde wässrige Hydroxylaminlösung (3 bis 40 Gew.-% HA) abgezogen.

Vergleichsbeispiel 1:

Gewinnung von freiem Hydroxylamin aus Hydroxylammoniumsulfat mit Natronlauge und nachfolgende Abtrennung einer wässrigen Hydroxylaminlösung von der Natriumsulfatlösung durch Strippen mit Wasserdampf in einer Kolonne.

1012 g/h stabilisierte Hydroxylammoniumsulfatlösung und 296 g/h 50 gew.-%ige Natronlauge wurden kontinuierlich in dem Rührkesselreaktor vermischt und die ablaufende Lösung wurde direkt auf den Kopf der Stripkolonne geleitet. Die Feed-Lösung enthielt etwa 8,2 Gew.-% Hydroxylamin. In den Sumpf der Stripkolonne wurden 3500 g/h Dampf eingeleitet. Der am Kopf der Stripkolonne austretende Brüden gelangte direkt in die Destillationskolonne. Diese wurde mit einem Rücklaufverhältnis von ca. 0,6 bei Normaldruck betrieben. Der Sumpf der Destillationskolonne wurde nicht beheizt. Die ablaufende Sumpfflüssigkeit wurde gekühlt und gesammelt. Sie enthielt etwa 7 Gew.-% Hydroxylamin. Die Sumpfablauflösung aus der Stripkolonne enthielt etwa 0,2 Gew.-% Hydroxylamin. Die Hydroxylaminverluste über die gesamte Versuchsanlage durch Zersetzung betrugen etwa 3,3 Gew.-%. Die Ausbeute an Hydroxylamin betrug 94 Gew.-%.

Vergleichsbeispiel 2:

Gewinnung von freiem Hydroxylamin aus Hydroxylammoniumsulfat mit Ammoniak und nachfolgende Abtrennung einer wässrigen Hydroxylaminlösung von der Ammoniumsulfatlösung durch Strippen mit Wasserdampf in einer Kolonne.

Der Versuch wurde analog Beispiel 1 durchgeführt. Eingesetzt wurden 710 g/h Hydroxylammoniumsulfatlösung und 541 g/h Ammoniakwasser (24,9 Gew.-% $NH_3$). Die Feed-lösung enthielt ca. 6,1 Gew.-% Hydroxylamin. Die Versuchsbedingungen - pH-Wert, Temperatur und Druck - waren dieselben wie bei Beispiel 1. Der Sumpfablauf aus der Destillationskolonne enthielt nur 3,3 Gew.-% Hydroxylamin. Die Sumpfablauflösung aus der Stripkolonne enthielt dagegen etwa 2,5 Gew.-% Hydroxylamin. Die Hydroxylaminzersetzung betrug ca. 6,6 Gew.-%. Die Ausbeute an Hydroxylamin betrug nur 59 Gew.-%. Aufgrund der geringen Basenstärke des Ammoniaks wurde das Hydroxylamin in dem Rührkessel nur zum Teil freigesetzt und ca. 32 % des eingesetzten Hydroxylamins verließen die Stripkolonne unumgesetzt als Hydroxylammoniumsulfat über den Sumpfablauf.

Beispiel 1:

Gewinnung von freiem Hydroxylamin aus Hydroxylammoniumsulfat mit Ammoniak im Gegenstrom durch direktes Einleiten in den Sumpf der Stripkolonne bei gleichzeitiger Abtrennung einer wässrigen Hydroxylaminlösung von der Ammoniumsulfatlösung durch Strippen mit Wasserdampf.

710 g/h stabilisierte Hydroxylammoniumsulfatlösung wurden direkt am Kopf der Stripkolonne eingeleitet. In den Sumpf der Stripkolonne wurden 3500 g/h 1,5-bar-Dampf (ca. 130°C) und gleichzeitig 631 g/h Ammoniakwasser eingespeist. Die Sumpfablauflösung aus der Stripkolonne enthielt etwa 0,16 Gew.-% Hydroxylamin. Der Sumpfablauf aus der Destillationskolonne enthielt 5,35 Gew-% Hydroxylamin. Die Hydroxylaminzersetzung betrug ca. 3,5 Gew.-%. Die Ausbeute an Hydroxylamin betrug damit 94 Gew.-%. Aufgrund der Gegenstrombehandlung konnte somit überraschenderweise das Hydroxylamin auch durch die schwache Base Ammoniak nahezu vollständig freigesetzt und gleichzeitig abgetrennt werden. Eine vermehrte Zersetzung wurde nicht festgestellt.

Das Ergebnis ist umso überraschender, als Ammoniak unter den vorliegenden Betriebsbedingungen nur sehr gering wasserlöslich ist.

Beispiel 2:

Gewinnung von freiem Hydroxylamin aus Hydroxylammoniumsulfat mit Ammoniak analog Beispiel 1, aber bei höherer Kolonnenbelastung und nur stöchiometrischem Ammoniakzusatz.

1421 g/h stabilisierte Hydroxylammoniumlösung wurden direkt am Kopf der Stripkolonne eingeleitet. In den Sumpf der Stripkolonne wurden 3500 g/h 1,5-bar-Dampf und gleichzeitig 370 g/h Ammoniakwasser eingespeist. Die Sumpfablauflösung aus der Stripkolonne enthielt etwa 1,7 Gew.-% Hydroxylamin. Der Sumpfablauf aus der Destillationskolonne enthielt 8,7 Gew.-% Hydroxylamin. Die Hydroxylaminzersetzung betrug ca. 4,4 Gew.-%. Die Ausbeute an Hydroxylamin betrug damit 82 Gew.-%. Auch bei stöchiometrischer Ammoniakzugabe und deutlich gesteigerter Kolonnenbelastung konnte eine weit über dem Gleichgewichtswert (siehe Vergleichsbeispiel 2) liegende Hydroxylaminausbeute erreicht werden. Bei optimaler Auslegung der Stripkolonne und der Kolonnenbelastung lässt sich hier noch eine deutlich höhere Hydroxylaminausbeute erreichen.

Beispiel 3:

Gewinnung von freiem Hydroxylamin aus Hydroxylammoniumsulfat mit Ammoniak im Gegenstrom durch direktes Einleiten in den Sumpf der Stripkolonne bei gleichzeitiger Abtrennung einer wässrigen Hydroxylaminlösung von der Ammoniumsulfatlösung durch Strippen mit Wasserdampf in Abwesenheit von Stabilisator.

Der Versuch aus Beispiel 1 wurde in gleicher Weise wiederholt (541 g/h statt 631 g/h Ammoniakwasser). Allerdings wurde der Hydroxylammoniumsulfatlösung kein Stabilisator zugesetzt. D.h. die Freisetzung und die Abtrennung des Hydroxylamins erfolgten in völliger Abwesenheit von Stabilisator. Die Sumpfablauflösung aus der Stripkolonne enthielt wiederum nur etwa 0,16 Gew.-% Hydroxylamin. Der Sumpfablauf aus der Destillationskolonne enthielt 5,2 Gew.-% Hydroxylamin. Die Hydroxylaminzersetzung betrug nur ca. 4,4 Gew.-%. Die Ausbeute an Hydroxylamin betrug damit 94 Gew.-%. Dieser Versuch zeigte, dass durch die Gegenstrombehandlung in einer Stripkolonne aufgrund der geringen Verweilzeit auch ohne den Zusatz von Stabilisator die übliche hohe Ausbeute erreicht werden kann. Die Zersetzung nimmt nur sehr gering zu.

**Patentansprüche**

1. Verfahren zur Herstellung einer wässrigen Lösung von freiem Hydroxylamin durch Behandlung einer Hydroxylammoniumsalzlösung mit einer Base und destillativer Auftrennung der erhaltenen Lösung in eine wässrige Hydroxylaminlösung und eine Salzfraktion, **dadurch gekennzeichnet, dass** man die Hydroxylammoniumsalzlösung im Gegenstrom mit Ammoniak oder Ammoniakwasser als Base behandelt und gleichzeitig durch Behandlung mit Wasser und/oder Wasserdampf die Auftrennung vornimmt.

2. Verfahren nach Anspruch 1, **dadurch gekennzeichnet, dass** man die Gegenstrombehandlung und die destillative Auftrennung mit Hilfe einer Stripkolonne durchführt.

3. Verfahren nach Anspruch 2, **dadurch gekennzeichnet, dass** man die erhaltene Lösung durch Einleiten von Wasser und/oder Wasserdampf und Ammoniak und/oder Ammoniakwasser in den Kolonnensumpf im Gegenstrom behandelt.

4. Verfahren nach Anspruch 2 oder 3, **dadurch gekennzeichnet, dass** man die wässrige Hydroxylaminlösung über Kopf der Stripkolonne abzieht.

5. Verfahren nach einem der Ansprüche 2 bis 4, **dadurch gekennzeichnet, dass** man bei einem Druck in der Stripkolonne im Bereich von 5 bis 300 kPa, vorzugsweise 10 bis 110 kPa, arbeitet.

6. Verfahren nach einem der vorhergehenden Ansprüche, **dadurch gekennzeichnet, dass** man die erhaltene wässrige Hydroxylaminlösung in einer Destillationskolonne aufkonzentriert.

7. Verfahren nach Anspruch 6, **dadurch gekennzeichnet, dass** man bei einem Druck in der Destillationskolonne im Bereich von 1 bis 200 kPa, vorzugsweise 10 bis 110 kPa, arbeitet.

8. Verfahren nach Anspruch 6 oder 7, **dadurch gekennzeichnet, dass** man das in der Destillationskolonne über Kopf abgezogene wasser, gegebenenfalls gasförmig, wieder in den Sumpf der Stripkolonne zurückführt.

9. Verfahren nach Anspruch 6, **dadurch gekennzeichnet, dass** man das Ausstrippen des freien Hydroxylamine aus der Salzlösung und die Aufkonzentration der Hydroxylaminlösung in einer Strip-Destillationskolonne durchführt.

10. Verfahren nach Anspruch 9, **dadurch gekennzeichnet, dass** die Entnahme der aufkonzentrierten Hydroxylaminlösung 1 bis 3 Böden über der Zuführung der Salzlösung erfolgt und das Wasser über Kopf und die Salzfraktion am Sumpf der Kolonne abgezogen werden.

11. Verfahren nach einem der vorhergehenden Ansprüche, **dadurch gekennzeichnet, dass** man allen Lösungen, die freies Hydroxylamin enthalten, einen Zersetzungsstabilisator zusetzt.

## Claims

1. A process for the preparation of an aqueous solution of free hydroxylamine by treating a hydroxylammonium salt solution with a base and separating the resulting solution by distillation into an aqueous hydroxylamine solution and a salt fraction, wherein the hydroxylammonium salt solution is treated with ammonia or ammonia water as the base by the countercurrent method and at the same time separation is effected by treatment with water or steam.

2. A process as claimed in claim 1, wherein the countercurrent treatment and the separation by distillation are carried out with the aid of a stripping column.

3. A process as claimed in claim 2, wherein the solution obtained is treated in the countercurrent procedure by passing water or steam and ammonia or ammonia water into the bottom of the column.

4. A process as claimed in claim 2 or 3, wherein the aqueous hydroxylamine solution is taken off via the top of the stripping column.

5. A process as claimed in any of claims 2 to 4, wherein the stripping column is operated at from 5 to 300, preferably from 10 to 110 kPa.

6. A process as claimed in any of the preceding claims, wherein the aqueous hydroxylamine solution obtained is concentrated in a distillation column.

7. A process as claimed in claim 6, wherein the distillation column is operated at from 1 to 200, preferably from 10 to 110, kPa.

8. A process as claimed in claim 6 or 7, wherein the water taken off via the top of the distillation column is recycled, if required in gaseous form, to the bottom of the stripping column.

9. A process as claimed in claim 6, wherein the stripping of the free hydroxylamine from the salt solution and the concentration of the hydroxylamine solution are carried out in a stripping/distillation column.

**10.** A process as claimed in claim 9, wherein the removal of the concentrated hydroxylamine solution is carried out from 1 to 3 trays above the feed of the salt solution and the water is taken off via the top and the salt fraction at the bottom of the column.

**11.** A process as claimed in any of the preceding claims, wherein a decomposition stabilizer is added to all solutions which contain free hydroxylamine.

**Revendications**

**1.** Procédé de préparation d'une solution aqueuse d'hydroxylamine libre par traitement d'une solution de sel d'hydroxylammonium par une base, et séparation par distillation de la solution obtenue en une solution aqueuse d'hydroxylamine et une fraction saline, **caractérisé en ce que** l'on traite la solution de sel d'hydroxylammonium en contre-courant par de l'ammoniac ou de l'eau ammoniacale en tant que base et que l'on entreprend simultanément la séparation par traitement par de l'eau et / ou de la vapeur d'eau.

**2.** Procédé selon la revendication 1, **caractérisé en ce que** l'on entreprend le traitement en contre-courant et la séparation par distillation à l'aide d'une colonne de strippage.

**3.** Procédé selon la revendication 2, **caractérisé en ce que** l'on traite la solution obtenue par injection d'eau et / ou de vapeur d'eau et d'ammoniac et / ou d'eau ammoniacale en contre-courant dans le fond de la colonne.

**4.** Procédé selon la revendication 2 ou 3, **caractérisé en ce que** l'on soutire la solution aqueuse d'hydroxylamine en tête de la colonne de strippage.

**5.** Procédé selon l'une des revendications 2 à 4, **caractérisé en ce que** l'on travaille à une pression de la colonne de strippage de l'ordre de 5 à 300 kPa, de préférence de 10 à 110 kPa.

**6.** Procédé selon l'une des revendications qui précèdent, **caractérisé en ce que** l'on concentre la solution aqueuse d'hydroxylamine obtenue dans une colonne de distillation.

**7.** Procédé selon la revendication 5, **caractérisé en ce que** l'on travaille à une pression de la colonne de distillation de l'ordre de 1 à 200 kPa, de préférence de 10 à 100 kPa.

**8.** Procédé selon la revendication 6 ou 7, **caractérisé en ce que** l'on renvoie dans la colonne de distillation l'eau soutirée en fraction de tête, éventuellement sous forme gazeuse, dans le fond de la colonne de strippage.

**9.** Procédé selon la revendication 6, **caractérisé en ce que** l'on entreprend le strippage de séparation de l'hydroxylamine libre et de la solution aqueuse, ainsi que la concentration de la solution d'hydroxylamine, dans une colonne de strippage - distillation.

**10.** Procédé selon la revendication 9, **caractérisé en ce que** le prélèvement de la solution d'hydroxylamine concentrée est opéré à 1 à 3 plateaux au-dessus de l'amenée de la solution saline et que l'eau est soutirée en tête de colonne et la fraction saline en fond de colonne.

**11.** Procédé selon l'une des revendications qui précèdent, **caractérisé en ce que** l'on ajoute à toutes les solutions contenant de l'hydroxylamine libre un stabilisant anti-décomposition.

# FIG.1

# FIG.2